# EUROPEAN PATENT SPECIFICATION

(11) **EP 2 329 425 B1**
(45) Date of publication and mention of the grant of the patent: **31.07.2013**
(21) Application number: 09785531.6
(22) Date of filing: 26.08.2009
(51) Int. Cl.: G06K 1/12, G03F 7/025, G03F 7/00, G03C 1/73, G02B 5/20, G02B 5/22, G02F 1/1335

(54) **MULTI-COLOURED CODES**
MEHRFARBIGE KODES
CODES MULTI-COULEURS

(30) Priority: 10.09.2008 GB 0816531; 11.09.2008 GB 0816620; 02.04.2009 GB 0905785
(43) Date of publication of application: 08.06.2011
(73) Proprietor: DataLase Ltd, Widnes WA8 8FW (GB)
(72) Inventor: WYRES, Christopher, Anthony, Widnes Cheshire WA8 8FW (GB); JARVIS, Anthony, Widnes Cheshire WA8 8FW (GB); PHILIPS, Tristan, Widnes Cheshire WA8 8FW (GB); WALKER, Martin, Widnes Cheshire WA8 8FW (GB)
(74) Representative: Creek, Isobel Clare
(86) International application number: PCT/GB2009/051069
(87) International publication number: WO 2010/029332

(56) References cited:
- EP-A- 0 279 600
- WO-A-98/19868
- WO-A-02/074548

## Description

### Field of the Invention

The present invention relates to methods of storing information comprising forming multi-coloured codes on articles, and to articles comprising multi-coloured codes.

### Background of the Invention

Machine readable codes such as barcodes, matrix codes and other indicia and symbologies are well known in the art. These codes typically comprise black and white symbols that represent information applied to articles. A method for generating unique composite indicia on a succession of articles is disclosed in US2003/0121984. This system uses printing techniques based on rotating cylinders to create the indicia. However, the indicia must be generated and then applied to articles in a separate step, which means that the process is rather time-consuming.
Document WO 98/19868 teaches using prechrome compounds to generate multi-coloured codes that are not machine readable.

### Summary of the Invention

The first aspect of the invention is a method according to claim 1.

The second aspect of the invention is an article according to claim 13.

The present invention is based on the realisation that the disadvantages associated with the prior art can be overcome by using selective irradiation, typically a computer-controlled laser marking system which has the capability to predetermine an image and attribute specific indicia prior to application to an article. The article can be irradiated rapidly, allowing the articles to be marked in a moving production line without sacrificing quality. The advantage of such a system over that disclosed in US2003/0121984 is that the indicia can be created on and attributed to an article in a single step, thereby greatly accelerating the process.

The ability to print symbologies and machine readable codes in multi-colour, rather than black and white, allows more information to be stored in the code. Up to now traditional printing methods such as those using inkjet printers, have been unable to print multi-coloured codes of sufficient quality quickly enough. The present invention overcomes these problems.

### Description of the Figures

Figure 1 shows a well known linear (1-dimensional) barcode;
Figure 2 shoes a data matrix (2-dimensional) barcode;
Figures 3 and 4 shows a high capacity colour barcodes;
Figure 5 shows a coloured ultracode; and
Figure 6 shows a Microsoft Custom Tag.

### Detailed Description of the Invention

The present invention is based on the finding that multi-coloured indicia, symbologies, machine readable codes and the like can be formed on substrates using a light activated colour change system. "Multi-coloured" refers to at least 3 different colours, which may include the background colour (for instance, white). Shades of colour are included within the term "colour". The term "code" is intended to cover codes in the traditional sense, as well as indicia, symbologies and multi-colour text.

Each indicium may be comprised of 2-dimensional shapes such as lines, dots, circles, elipses, polygons etc. or combinations thereof. The shapes can be geometric or non-geometric. The shapes can be monochrome, multicoloured or combinations of both. The indicia can be any indicia known to those skilled in the art. Examples include human or machine-readable code, such as symbols, barcodes and matrix codes. Further examples of the indicia which can be generated using this invention are disclosed in US2003/0121984.

The invention is particularly suitable for the generation of machine-readable codes such as barcodes, as this allows the articles to be automatically identified and tracked throughout their lifecycle down to an individual level. This then provides the basis of a 'track and trace' system for the articles.

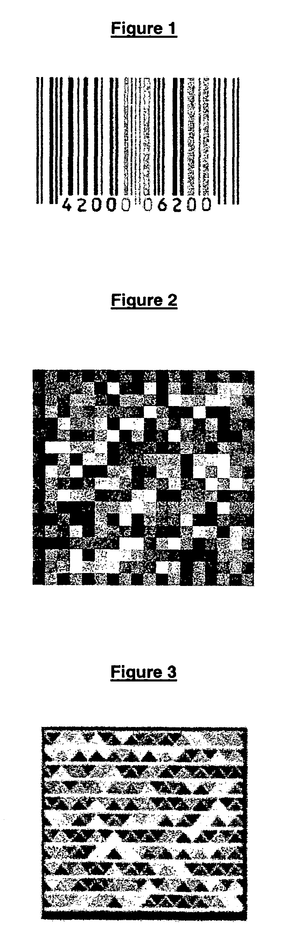

The multi-coloured codes that can be generated using the present invention include linear (1-dimensional) barcodes, such as that represented by a Universal Product Code (UPC), or a European Article Number (EAN) code, as exemplified in Figure 1.

Data matrix (2-dimensional) barcodes such as that shown in Figure 2 may also be generated.

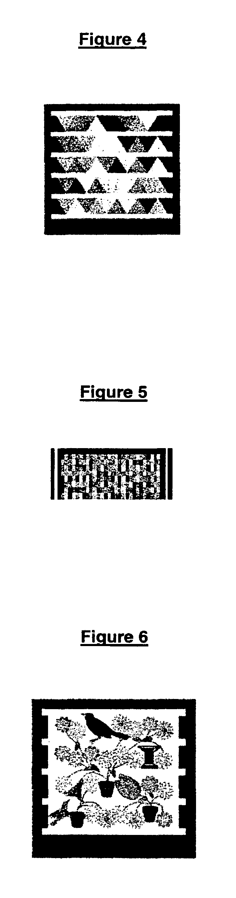

Preferred codes are high capacity colour barcodes such as those taught in EP1612724 (see Figure 3). These barcodes comprise a set of geometric symbols in a colour space. Particularly preferred is a high capacity colour barcode comprising a set of triangular symbols. Also preferred is a high capacity colour barcode comprising a white space separator being positioned between the geometric symbols. Also preferred is a high capacity colour barcode comprising a colour space that comprises at least one of a set of grayscale values and a set of colour values. Also preferred are high capacity coloured barcodes 'Tags' comprising 4 colours in a 5 x 10 grid. Other codes include ultracodes (figure 5), dataglyphs, supercodes, snowflake codes, smartcodes, minicodes, INTACTA codes, hue codes, Dot Code A, datastrip codes, CP codes, Code 16K, Code 1, codablock, Aztec codes, array tags, 3-DI, code 49, QR codes, Micro PDF417 codes, PDF417 codes and maxi codes and the like. Particularly preferred is a Microsoft custom tag in which the code has been integrated into the look and form of the messaging itself, as exemplified in Figure 6.

Further codes which may be generated using the present invention are taught in "The Bar Code Book: Fifth Edition - A Comprehensive Guide To Reading, Printing, Specifying, Evaluating, And Using Bar Code and Other Machine-Readable Symbols", by Roger C. Palmer, Trafford Publishing, Bloomington IN, 2007.

As coloured codes can store much more information than traditional black and white codes, they can be used for identification information, transactional information and medical information, for instance at least one of a facial image and biometric information. Particularly preferred biometric information comprises at least one of an iris scan, a thumbprint scan, a fingerprint scan and a DNA sample representation. Further information that can be stored on coloured codes includes: transactional information, medical information and multi-media data such as movie clips and the like.

The term colour former encompasses any substance or combination of substances which change appearance or absorption profile when irradiated with light. The light can be UV, visible, near-infrared or mid-infrared. The light can be monochromatic or broadband. The light can be laser light or non-coherent light.

Lasers are particularly preferred as they give high definition images, essential for machine readable codes.

The colour former can be included within the article (such as a moulded plastic article made using a masterbatch technique), or added to the article (for instance, paper) during manufacture, or applied directly to the article such as via a spray, or applied to the article as part of a coating application using a printing technique.

The article can be any substrate, such as glass, film, paper, plastics, wood, foodstuffs, pharmaceuticals or any substance that colour former can be incorporated into. The colour former can also be formulated into an ink, paint or lacquer, and then applied to the substrate using any suitable technique. Particularly preferred substrates are those that can be used to make banknotes, the outer shell of pharmaceutical tablets, excise stamps, ID and high value documents such as passports and driving licenses, and the packaging of consumer goods.

A laser-markable composition can be incorporated into a structure beneath a substrate which is opaque to visible light but transparent to NIR light. This allows a coloured indicium of the present invention to be created in the laser-markable composition using a NIR laser that is not visible to the eye, but can be detected using a NIR scanner such as a camera.

Particularly preferred are colour formers that are initially colourless or white but become visually coloured upon undergoing a colour change reaction.

Preferred examples of colour formers are laser-markable compositions disclosed in WO02/068205 WO02/074548, WO04/043704, WO2005/012442, WO2005/068207, WO2006/018640, WO2006/051309, WO2006/129086, WO2006/129078, WO2007/045912 and WO2007/063339. Particularly preferred examples of constituents of the laser-markable compositions are metal oxyanions, leuco dyes, carbazoles, diacetylenes, and dehydration agents with hydroxyl-containing compounds. When employing a near-infrared laser, it is desirable to incorporate a near-infrared absorbing substance in the formulation.

Preferred metal oxyanions include molybdates, particularly preferred molybdates include amine molybdates. Ammonium octamolybdate is particularly preferred still. Also preferred are borates such as metaborates, in particular sodium metaborate.

Any diacetylene may be used in the present invention.

Diacetylene compounds are substances which include at least one diacetylene group, i.e. -C≡C-C≡C-. Particularly preferred are diacetylene compounds that exhibit a polychromic colour change reaction. These compounds are initially colourless but on exposure to suitable light, such as a ultra-violet light, undergo a colour change reaction to produce a blue colour. Certain diacetylenes in their blue form can then be exposed to further light such as near-infrared light, which converts the blue form into a magenta, red, yellow and green form.

Specific examples of diacetylene compounds may be used in the present invention are given in the published patent application number WO2006/018640 and W02009/081385.

Further examples include those represented by the following general structures: 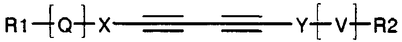 or, 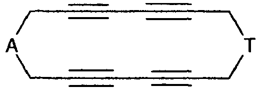 or, 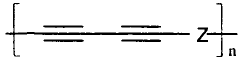 or, 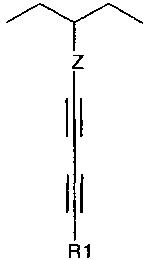 wherein,
X and Y are divalent straight-chain or branched alkylene type groups (-CH₂-)ₙ wherein n = 0 to 24, or a divalent phenylene type group (-C₆H₄-)ₙ wherein n = 0 to 1 or a combination of both types;
Q and V, if present, are divalent bridging groups such as -S-, -O-, -NHR'- wherein R' is hydrogen or alkyl, amide, ester or thioester groups, carbonyl or carbamate;
R1 and R2 are H or alkyl;
A and T are divalent groups that can either be an alkylene or phenylene type such as X or Y, or a bridging type such as Q or V, or a combination of both types, X or Y that additionally comprises a Q or V group;
Z is a divalent group such as X or Q or a combination of both, X that additionally comprises a Q group, or Z can be not present, and n is 2 to 20,000,000.

Groups X and Y are optionally substituted, preferably at the α, α or γ position with respect to the diacetylene group. For instance, there may be an α-hydroxy group, as shown in the formula below:

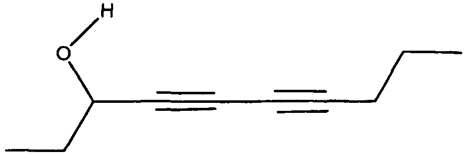

The diacetylene may be symmetrical or non-symmetrical.

Q and V are optionally substituted with groups such as amine, alcohol, thiol or carboxylic acid. Both Q and V may be present, or alternatively, just Q.

Where R1 and R2 in the above compounds are alkyl, they may be straight or branched chain and may additionally comprise other functional groups known in organic chemistry such as alcohol, amine, carboxylic acid, aromatic ring systems and unsaturated groups such as alkenes and alkynes.

Groups R1, R2, Q, V, X and Y may comprise ionic groups, which can be anionic or cationic. Examples include sulphate groups (-SO₃-) and ammonium groups. The ionic groups can have any suitable counterion.

Further diacetylene compound examples are diacetylene carboxylic acids and derivatives thereof. A particularly preferred diacetylene carboxylic acid compounds are 10,12-pentacosadiynoic acid and 10,12-docosadiyndioic acid and their derivatives thereof. Further examples include: 5,7,-dodecadiyndioic acid, 4,6-dodecadiynoic acid, 5,7-eicosadiynoic acid, 6,8-heneicosadiynoic acid, 8,10-heneicosadiynoic acid, 10,12-heneicosadiynoic acid, 10,12-heptacosadiynoic acid, 12,14-heptacosadiynoic acid, 2,4-heptadecadiynoic acid, 4,6-heptadecadiynoic acid, 5,7-hexadecadiynoic acid, 6,8-nonadecadiynoic acid, 5,7-octadecadiynoic acid, 10,12-octadecadiynoic acid, 12,14-pentacosadiynoic acid, 2,4-pentadecadiynoic acid, 5,7-tetradecadiynoic acid, 10,12-tricosadiynoic acid 2,4-tricosadiynoic acid, and derivatives thereof. Diacetylene alcohols and diol compounds and derivatives thereof are also preferred, examples include: 5,7-dodecadiyn-1,12-diol, 5,7-eicosadiyn-1-ol, 2,4-heptadecadiyn-l-ol, 2,4-hexadiyn-1,6-diol, 3,5-octadiyn-1,8-diol, 4,6-decadiyn-1,10-diol, 2,7-dimethyl-3,5-octadiyn-2,7-diol, 14-hydroxy-10,12-tetradecadiynoic acid. Others include 1,6-diphenoxy-2,4-hexadiyne, 1,4-diphenylbutadiyne, 1,3-heptadiyne, 1,3-hexadiyne and 2,4-hexadiyne.

A combination of different diacetylenes can also be employed. A particularly preferred combination is that of 10,12-pentacosadiynoic acid or 10,12-docosadiyndioiac acid and derivatives thereof and 2,4-hexadiyn-1,6-diol. 10,12-pentacosadiynoic acid can produce blue, red and yellow. 2,4-hexadiyn-1,6-diol can produce a cyan colour. Activating 10,12-pentacosadiynoic acid to yellow and 2,4-hexadiyn-1,6-diol to cyan simultaneously gives rise to green.

A diacetylene compound that is 'activatable', i.e. has a first solid form that is relatively unreactive to light, but upon 'activation' is transformed into a second form that is relatively reactive to light and is thus capable of undergoing a colour change reaction to create a visible image, has particular utility in the present invention. Without being limited by theory the activation could be a re-crystallisation, crystal form modification, co-crystal combination or a melting/re-solidification process.

Reversibly activatable diacetylenes that can flip between unactivated and activated forms in response to or removal of a stimulus also form part of the present invention.

Particularly preferred diacetylenes are those that after initial melting and resolidification activation are colourless but become blue on exposure to light, particularly UV light. The most preferred diacetylenes compounds are carboxylic acids and derivatives thereof where:

R-C≡C-C≡C-R'

either R and/or R' comprises a COX group,
where X is: -NHY, -OY, -SY, where Y is H or any group comprising at least one carbon atom.

Particularly preferred still are derivatives in which the carboxylic acid group has been functionalised into an amide, ester or thioester. These can be easily made by reacting a diacetylene carboxylic acid with a chlorinating agent such as oxalyl chloride and then reacting the diacetylene acid chloride with a nucleophilic compound such as an amine, alcohol or thiol. A particularly preferred diacetylene carboxylic acid compound is 10,12-docosadiyndioic acid and derivatives thereof such as amides, esters, thioesters and the like. Especially particularly preferred 10,12-docosadiyndioic acid derivatives are amides. A particularly preferred still 10,12-docosadiyndioic acid amide derivative is the propargylamide in which at least one, preferably both carboxylic acid groups have been transformed into the propargylamide, as shown below:

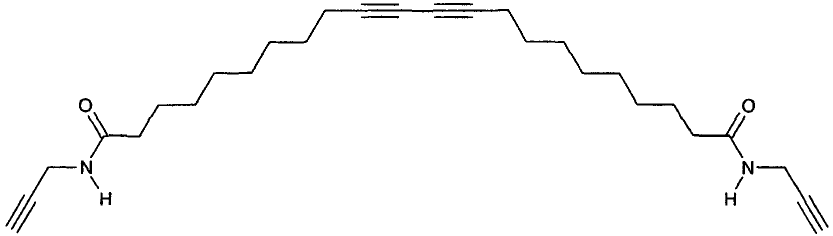

Propargylamides are made by reacting carboxylic acids with propargylamine.
Other preferred amines that can be used to create suitable amides include: dipropargylamine and 1,1-dimethylpropargylamine.

The activatable diacetylene is generally used together with a NIR light absorbing agent, which is a compound that absorbs light in the wavelength range 700 to 2500 nm.

A NIR light source, such as a NIR fibre laser, is used to heat the article comprising the colour former only in the areas where the image is required. A UV light source, such as a germicidal lamp, is then used to flood the article with UV light. However, the diacetylene compound only undergoes a colour change reaction to create an image in the areas which were initially exposed to NIR light. The areas of the article unexposed to NIR light undergo a negligible colour change reaction, remain essentially colourless, and are stable to background radiation. A thermal print head may be used to initiate the heat-based pre-activation step.

Specific examples of NIR light absorbing agents include:
i. Organic NIR absorbing agents
ii. NIR absorbing 'conductive' polymers
iii. Inorganic NIR absorbing agents
iv. Non-stoichiometric inorganic absorbing agents.

Particularly preferred NIR absorbing agents are those that have essentially no absorbance in the visible region of the spectrum (400 to 700 nm) and thus give rise to coatings that appear visibly colourless.

Organic NIR absorbing agents are known as NIR dyes/pigments. Examples include but are not limited to: families of metallo-porphyrins, metallo-thiolenes and polythiolenes, metallo-phthalocyanines, aza-variants of these, annellated variants of these, pyrylium salts, squaryliums, croconiums, amminiums, diimoniums, cyanines and indolenine cyanines.

Examples of organic compounds that can be used in the present invention are taught in US6911262, and are given in Developments in the Chemistry and Technology of Organic dyes, J Griffiths (ed), Oxford: Blackwell Scientific, 1984, and Infrared Absorbing Dyes, M Matsuoka (ed), New York: Plenum Press, 1990. Further examples of the NIR dyes or pigments of the present invention can be found in the Epolight™ series supplied by Epolin, Newark, NJ, USA; the ADS series supplied by American Dye Source Inc, Quebec, Canada; the SDA and SDB series supplied by HW Sands, Jupiter, FL, USA; the Lumogen™ series supplied by BASF, Germany, particularly Lumogen™ IR765 and IR788; and the Pro-Jet™ series of dyes supplied by FujiFilm Imaging Colorants, Blackley, Manchester, UK, particularly Pro-Jet™ 830NP, 900NP, 825LDI and 830LDI. Further examples are taught in WO08/050153.

Examples of NIR absorbing 'conductive' polymers include PEDOT such as, the product Baytron^{®} P supplied by HC Starck. Further examples are taught in WO05/12442.

Examples of inorganic NIR absorbing agents include copper (II) salts. Copper (II) hydroxyl phosphate (CHP) is particularly preferred. Further examples are taught in WO05/068207.

Examples of non-stoichiometric inorganic absorbing agents include reduced indium tin oxide, reduced antimony tin oxide, reduced titanium nitrate and reduced zinc oxide. Further examples are taught in WO05/095516. Reduced indium tin oxide is particularly preferred in combination with a 1550 nm to 2500 nm laser.

It is particularly preferred if the absorption profile of the NIR absorbing agent approximately matches the emission wavelength(s) of the NIR light source employed.

Other light absorbing agents that can be used, instead of the NIR absorbing agent include UV (120 to 400 nm), visible (400 to 700 nm) and mid-infrared (~10.6 microns) light absorbing agents. Examples includes dyes/pigments, UV absorbers and Iriodin type agents.

Charge transfer agents may be used together with a diacetylene in the present invention. These are substances that are initially colourless but react with protons (H⁺) to produce a coloured form. Charge transfer agents that form part of the present invention include compounds known as carbazoles and suitable examples are described in WO2006/051309. Further charge transfer agents known to those skilled in the art such as leuco dyes can also be used. Charge transfer agents are usually used in combination with other substances such as light absorbing agents which can be wavelength specific, heat generating agents, acid generating agents and the like.

A particularly preferred combination for use in this invention is a diacetylene such as 10,12-pentacosaidiynoic acid, or 10,12-docosadiyndioic acid (or a derivative thereof), to give blue and red, with a charge transfer agent that generates green.

Leuco dyes can be any number of colourants that exhibit colour change or formation upon exposure to certain types of radiation. Non-limiting examples of suitable leuco dyes include fluorans, phthalides, amino-triarylmethanes, aminoxanthenes, aminothioxanthenes, amino-9,10-dihydro-acridines, aminophenoxazines, aminophenothiazines, aminodihydro-phenazines, aminodiphenylmethanes, aminohydrocinnamic acids (cyanoethanes, leuco methines) and corresponding esters, 2(p-hydroxyphenyl)-4,5-diphenylimidazoles, indanones, leuco indamines, hydrozines, leuco indigoid dyes, amino-2,3-dihydroanthraquinones, tetrahalo-p,p'-biphenols, 2(p-hydroxyphenyl)-4,5-diphenylimidazoles, phenethylanilines, phthalocyanine precursors (such as those available from Sitaram Chemicals, India), and mixtures thereof. Experimental testing has shown that fluoran based dyes are one class of leuco dyes which exhibit desirable properties. Additionally, phthalides and aminotriarylmethanes can also be desirable for use in certain applications. Further suitable leuco dyes are described in "Dyestuffs and Chemicals for Carbonless Copy Paper" presented at Coating Conference (1983, San Francisco, CA pp 157-165) by Dyestuffs and Chemicals Division of Ciba-Geigy Corp Greenboro, NC. Certain leuco dyes are understood to exhibit halochromism and be colourless in neutral or alkaline media, but become coloured when they react with an acidic, proton donating or electron-accepting substance. Suitable examples include compounds such as triphenylmethanephthalide compounds, azaphthalide compounds, isoindolide phthalide compounds, vinylphthalide compounds, spiropyran compounds, rhodamine lactam compounds, lactone and dilactone compounds, benzoyl leuco methylene blue (BLMB), derivatives of bis-(p-di-alkylaminoaryl)methane, xanthenes, indolyls, auramines, chromenoindol compounds, pyrollo-pyrrole compounds, fluorene compounds, and fluoran and bisfluoran compounds, with fluoran compounds being preferred. Particularly preferred commercial leuco dye products include the Pergascript range made by Ciba Speciality Chemicals, Basel, Switzerland, those by Yamada Chemical Co. Ltd, Kyoto, Japan, those marketed by Nippon Soda and those supplied by BF Goodrich Corp., Cincinnati, OH.

Charge transfer agents are compounds that are colourless when neutral but become coloured when upon acquisition of charge. Examples include carbazoles such as N-ethyl carbazole. Further examples are taught in WO2006051309.

The laser markable composition may also comprise a photo or thermal acid or base generating agent. A photoacid generating agent is a substance that on exposure to light generates an acidic environment, usually by liberating protons. A thermal acid generating agent is a substance that on exposure to heat generates an acidic environment, usually by liberating protons. Preferred acid generator examples include 'onium' type compounds such as sulphonium or iodonium salts, and triflates. Examples include the Cyracure products supplied by Dow. It is particularly preferred to include an acid generator when using halochromic leuco dyes or charge transfer agents.

Conversely, a photobase generating agent is a substance that on exposure to light generates a basic environment, usually by scavenging protons. A thermal base generating agent is a substance that on exposure to heat generates a basic environment, usually by scavenging protons.

The laser markable composition may also comprise a light absorbing agent. Particularly preferred are those that absorb light at a similar wavelength to the light used to activate the colour change reaction. These can be UV absorbers, visible absorbers, near-infrared absorbers or mid-infrared absorbers. Suitable examples of near-infrared absorbers include: copper (II) hydroxyl phosphate, mixed metal oxides such as indium tin oxide, antimony tin oxide including non-stoichiometric reduced versions and coated micas thereof, conductive polymers and organic dye/pigment type near infrared absorbers such as N,N,N',N'-tetrakis(4-dibutylaminophenyl)-p-benzoquinone bis(iminium hexafluoroantimonate).

The profile of the laser beam can be tailored to any given shape, size or energy distribution, using appropriate beam-shaping optics.

The laser can have an emission wavelength in the region 120 nm - 20 µm. Preferred lasers are carbon dioxide lasers, NIR lasers, visible band lasers and UV lasers. Particularly preferred lasers are NIR lasers, such as DPSS lasers, fibre lasers, diode lasers and laser diode arrays. The laser used can be pulsed or continuous wave.

The invention will now be illustrated by the following Example:

### Examples 1

An ink formulation was made up as follows:
Pergascript Blue SRB-P (ex. Ciba, 1.7g), Yamada Yellow Y-726 (ex. Yamada, 2.8g), Tinuvin 770DF (ex. Ciba, 0.6g), Sericol Polyplast PY-383 (ex. Sericol, 56 g), Sericol Thinner ZV-557 (ex. Sericol 35.5g) and Cyracure UVI Photoinitiator UVI-6992 (ex. Dow, 3.4g).

This ink formulation was drawn down on to 50 micron white PET film using a 30 micron K-bar and RK Proofer Printer.

10,12-Pentacosadiynoic acid (1.25g), Durotak 180-1197 (19g) and ethyl acetate (4g) were mixed together to produce an ink solution.

The ink was coated onto clear 50 micron biaxially orientated polypropylene film using a 30 micron K-bar and RK Proofer Printer.

The two draw downs were then laminated together.

A UV laser was then used to create:
1. A linear (1-dimensional) barcode comprising red, blue, magenta, orange, cyan, green, yellow and black bars separated by white spaces (see Figure 1).
2. A data matrix (2-dimensional) code comprising red, blue, magenta, orange, green, cyan, yellow, black and white squares (see Figure 2).
3. A high capacity colour barcode comprising red, blue, magenta, orange, cyan, green, yellow and black triangular symbols separated by white spaces (see Figure 3).
4. A 4 colours, 10x5 tag (see figure 4).
5. A coloured Ultracode (see figure 5).

## Claims

1. A method of storing information in or on an article, wherein the article comprises a colour former which is selectively irradiated to produce a multi-coloured code comprising at least three different colours, **characterised in that** the code is machine readable, and the colour former is a diacetylene.

2. A method according to claim 1, wherein the colour former is irradiated such that a 1-dimensional barcode, a 2-dimensional matrix code, or a high capacity colour barcode is produced.

3. A method according to claim 2, wherein the high capacity colour barcode comprises a set of 2-D geometric symbols in a colour space in the media.

4. A method according to claim 3, wherein the set of geometric symbols comprises a set of triangular symbols.

5. A method according to any preceding claim, wherein the article is white prior to irradiation.

6. A method according to any preceding claim, wherein the multi-coloured code comprises at least one of a set of grayscale values and a set of colour values.

7. A method according to any preceding claim, wherein the colour former is irradiated with a light source, preferably having a wavelength in the region 120 nm to 20 microns.

8. A method according to any preceding claim, wherein the article further comprises a near-infrared absorbing agent.

9. A method according to claim 8, wherein the near-infrared absorbing agent is copper (II) hydroxide phosphate, a reduced metal or mixed metal oxide, a conductive polymer or an organic dye/pigment.

10. A method according to any preceding claim, wherein the article further comprises an acid or base generating agent.

11. A method according to any preceding claim, wherein the information comprises at least one of identification information, transactional information, medical information or multi-media data such as movie clips.

12. A method according to claim 11, wherein the information comprises identification information, and the identification information comprises at least one of a facial image or biometric information, preferably at least one of an iris scan, a thumbprint scan, a fingerprint scan or a DNA sample representation.

13. An article comprising a multi-coloured code comprising at least three different colours, **characterized in that** the code is machine readable and obtainable by a method according to any of the preceding claims.

## Patentansprüche

1. Verfahren zur Speicherung von Information in oder auf einem Gegenstand, wobei der Gegenstand einen Farbbildner umfasst, der selektiv bestrahlt wird, um einen mehrfarbigen Code zu produzieren, der zumindest drei verschiedene Farben umfasst, **dadurch gekennzeichnet, dass** der Code maschinenlesbar ist und der Farbbildner ein Diacetylen ist.

2. Verfahren nach Anspruch 1, wobei der Farbbildner derart bestrahlt wird, dass ein 1-dimensionaler Strichcode, ein 2-dimensionaler Matrixcode oder ein Farbstrichcode hoher Kapazität produziert wird.

3. Verfahren nach Anspruch 2, wobei der Farbstrichcodes hoher Kapazität einen Satz geometrischer 2-D-Symbole in einem Farbraum in den Medien umfasst.

4. Verfahren nach Anspruch 3, wobei der Satz geometrischer Symbole einen Satz dreieckiger Symbole umfasst.

5. Verfahren nach einem beliebigen vorangehenden Anspruch, wobei der Gegenstand vor Bestrahlung weiß ist.

6. Verfahren nach einem beliebigen vorangehenden Anspruch, wobei der mehrfarbige Code zumindest einen eines Satzes von Grauskalenwerten und eines Satzes von Farbwerten umfasst.

7. Verfahren nach einem beliebigen vorangehenden Anspruch, wobei der Farbbildner mit einer Lichtquelle bestrahlt wird, die vorzugsweise eine Wellenlänge im Bereich 120 nm bis 20 µ aufweist.

8. Verfahren nach einem beliebigen vorangehenden Anspruch, wobei der Gegenstand weiter ein Nah-Infrarot absorbierendes Mittel umfasst.

9. Verfahren nach Anspruch 8, wobei das Nah-Infrarot absorbierende Mittel Kupfer (II) -hydroxidphosphat, ein reduziertes Metall- oder Mischmetalloxid, ein leitendes Polymer oder ein organischer Farbstoff bzw. ein organisches Pigment ist.

10. Verfahren nach einem beliebigen vorangehenden Anspruch, wobei der Gegenstand weiter eine Säure oder Base erzeugendes Mittel umfasst.

11. Verfahren nach einem beliebigen vorangehenden Anspruch, wobei die Information zumindest eine von Identifikationsinformation, Transaktionsinformation, medizinischer Information oder Multimediadaten wie beispielsweise 'Movie Clips' umfasst.

12. Verfahren nach Anspruch 11, wobei die Information Identifikationsinformation umfasst und die Identifikationsinformation zumindest eine von einem Gesichtsbild oder biometrischer Information, vorzugsweise zumindest eine von einem Iris-Scan, einem Daumenabdruck-Scan, einem Fingerabdruck-Scan oder einer DNA-Musterdarstellung umfasst.

13. Gegenstand, der einen mehrfarbigen Code umfasst, der zumindest drei verschiedene Farben umfasst, **dadurch gekennzeichnet, dass** der Code maschinenlesbar ist und durch ein Verfahren nach einem beliebigen der vorangehenden Ansprüche zu erlangen ist.

## Revendications

1. Méthode de rangement de l'information dans un article ou sur un article, **caractérisée en ce que** l'article comporte un modèle de couleurs qui est sélectivement irradié de manière à produire un code multi-couleurs qui comprend au moins trois couleurs, **caractérisée en ce que** le code est lisible par une machine et **en ce que** le modèle de couleurs est un diacétylène.

2. Méthode selon la revendication 1, **caractérisée en ce que** le modèle de couleurs est irradié de manière à ce que soit produit un code à barres unidimenstionnel, bidimensionnel ou bien de grande capacité.

3. Méthode selon la revendication 2, **caractérisée en ce que** le code à barres de grande capacité comprend un ensemble de symboles géométriques bidimensionnels dans un espace couleur du support.

4. Méthode selon la revendication 3, **caractérisée en ce que** l'ensemble de symboles géométriques comprend un ensemble de symboles triangulaires.

5. Méthode selon l'une quelconque des revendications précédentes, **caractérisée en ce que** l'article est de couleur blanche avant l'irradiation.

6. Méthode selon l'une quelconque des revendications précédentes, **caractérisée en ce que** le code multi-couleurs comprend au moins l'une des valeurs de l'échelle des gris ainsi qu'un ensemble de valeurs de couleur.

7. Méthode selon l'une quelconque des revendications précédentes, **caractérisée en ce que** le modèle de couleurs est irradié par une source de lumière dont la longueur d'onde sera de préférence comprise entre 120 nm et 20 microns.

8. Méthode selon l'une quelconque des revendications précédentes, **caractérisée en ce que** l'article comprend par ailleurs un agent qui absorbe le longueurs d'onde proches de l'infrarouge.

9. Méthode selon la revendication 8, **caractérisée en ce que** l'agent qui absorbe le longueurs d'onde proches de l'infrarouge est du phosphate d'hydroxyde de cuivre (II), un oxyde de métal réduit ou de métal mixte, un polymère conducteur ou un colorant/pigment organique.

10. Méthode selon l'une quelconque des revendications précédentes, **caractérisée en ce que** l'article comprend par ailleurs un agent générateur d'acide ou d'alcali.

11. Méthode selon l'une quelconque des revendications précédentes, **caractérisée en ce que** l'information comprend au moins l'un parmi les détails suivants: détails d'identification, détails de transaction, détails médicaux ou données multimédia telles que des clips vidéo.

12. Méthode selon la revendication 11, **caractérisée en ce que** l'information comprend des détails d'identification, et **en ce que** ces détails d'identification comportent au moins l'un parmi les détails suivants: une image du visage ou des détails biométriques, de préference au moins l'une parmi les images suivantes: une image de l'iris, une image de l'empreinte du pouce, une image de l'empreinte digitale, ou bien la représentation d'un échantillon d'ADN.

13. Article comportant un code multi-couleurs qui comprend au moins trois couleurs, **caractérisé en ce que** le code est lisible par une machine et **en ce qu'**il est obtenu par une méthode selon l'une quelconque des revendications précédentes.
